# EUROPÄISCHE PATENTANMELDUNG

(11) **EP 0 718 804 A2**
(43) Veröffentlichungstag der Anmeldung: **26.06.1996**
(21) Anmeldenummer: 95250304.3
(22) Anmeldetag: 12.12.1995
(51) Int. Cl.: G07C 1/10

(54) **Datenerfassungsvorrichtung**

(30) Priorität: 14.12.1994 DE 4446680
(71) Anmelder: Junghans Uhren GmbH, 78713 Schramberg (DE)
(72) Erfinder: Schaffer, Holger, Dipl.-Ing., D-13409 Berlin (DE)
(74) Vertreter: Hofmann, Gerhard, Dipl.-Ing. Patentassessor

(57) **Zusammenfassung**

Die Erfindung betrifft ein Verfahren und eine Vorrichtung zur Erfassung von Daten für das betriebliche Rechnungswesen. Sie kann auch für das persönliche Zeitmanagement und zur Protokollierung von Tätigkeiten herangezogen werden.
Aufgabe der Erfindung ist es die im Betrieb anfallenden Kosten, insbesondere die Personalkosten, den jeweiligen Kostenträgern zuzuordnen. Die Lösung besteht darin, daß ein Verfahren und eine Vorrichtung entwickelt wurden, womit sich ein mobiles Datenerfassungsgerät realisieren läßt, daß sich besonders gut in die bestehende Arbeitsumgebung des Benutzers integrieren läßt und somit für den Benutzer eine nur minimale zusätzliche Belastung darstellt. Außerdem lassen sich die durch die erfindungsgemäßen Lösung erfaßten Daten ohne weitere Aufarbeitung direkt elektronisch weiterverarbeiten. Due Erfindung ist besonders geeignet, die Daten zu erfassen, die aufgrund einer mangelnden Akzeptanz bestehender Systeme seitens der Mitarbeiter bisher nicht oder nur schwer erfaßbar waren.

## Beschreibung

Die Erfindung betrifft eine Datenerfassungsvorrichtung gemäß dem Oberbegriff des Anspruches 1.

Eine derartige Vorrichtung ist aus der DE 31 27 825 C2 als Informationsanordnung bekannt, die ein kleines, tragbares, etwa armbanduhrförmiges Informationsgerät und ein mit diesem zur Informationsübertragung koppelbares externes Gerät umfaßt. Das externe Gerät kann ein PC sein; jedenfalls handelt es sich um einen Rechner mit Zentraleinheit und Tastenfeld, auf dem Datenverarbeitungsprogramme sowie Betriebsprogramme für eine Datenaufnahme und -Vorverarbeitung im Informationsgerät erstellt bzw. modifiziert werden können. Je nach dem Einsatzzweck wird das extern erstellte Programm auf das tragbare Informationsgerät überspielt, um mit dem beispielsweise eine Verkaufsstatistik aufzunehmen, die dann später im externen Gerät zum Kontenbuch für die Buchführung weiterverarbeitet wird. Auf die ohnehin reduzierte Eingabetastatur beim mobilen Informationsgerät kann sogar ganz verzichtet werden, wenn dieses mit einer Spracheingabevorrichtung ausgestattet wird. Für die Übergabe der vorverarbeiteten und zwischengespeicherten Informationen an das externe Gerät zur Weiterbearbeitung kann eine optronische Koppelstrecke dienen.

Der Erfindung liegt die Aufgabe zugrunde, eine gattungsgemäße Datenerfassungsvorrichtung dahingehend weiterzuentwickeln, daß die manuell Eingabe noch erleichtert und dadurch die Scheu vor dem Einsatz eines solchen mobilen Datenerfassungsgerätes beispielsweise zum Festhalten später betriebswirtschaftlich auszuwertender Grundinformationen abgebaut werden kann. Diese Aufgabe ist erfindungsgemäß im wesentlichen dadurch gelöst, daß das Datenerfassungsgerät der gattungsgemäßen Datenerfassungsvorrichtung auch gemäß dem Kennzeichnungsteil des Hauptanspruches ausgelegt ist.

Nach dieser Lösung wird das mobile Datenerfassungsgerät zu Betriebsbeginn vom externen Rechner aus für eine bestimmte, aktuell anstehende Datenerfassungsaufgabe initialisiert. Damit sind bestimmte Datensatzelemente in das mobile Datenerfassungsgerät eingespeichert, die durch bloßen Tastendruck nacheinander aufgerufen werden können. Zwei unterschiedliche Datensatzelemente, wobei das obere der miteinander zu verknüpfende Datensatzelemente nachstehend auch als Bezeichung der Datensatzelemente und das untere als vorgegebene Auswahlmöglichkeit bezeichnet wird, können auf Tastendruck miteinander verknüpft und im mobilen Datenerfassungsgerät zwischengespeichert werden, solange sie gleichzeitig in der Anzeigeeinheit erscheinen. Als zweites oder weiteres Datensatzelement kann aber auch die aktuelle Uhrzeit dem zuerst aufgerufenen Datensatzelement zugeordnet werden. In der jeweiligen Serie von Datensatzelementen können auch voneinander unterscheidbare Platzhalter vorkommen, denen erst bei der weiteren Datenautbereitung im externen Rechner eine bestimmte aussagekräftige Bedeutung zugeordnet wird.

Von besonderem Vorteil ist die Anwendung dieser Datenerfassungsvorrichtung, aus mobilem Datenerfassungsgerät mit aufrutbaren vorbereiteten Datensatzelementen und abschließender Datenauswertung erst im externen Rechner, zur Datengewinnung für das betriebliche Rechnungswesen, bei welchem die erfaßten Daten zu Datensätzen zusammengestellt und zwischengespeichert werden, um sie später der elektronischen Weiterverarbeitung zum Beispiel in der Lohn- und Gehaltsabrechnung oder in der Kostenstellen- und Kostenträgerrechnung zur Verfügung zu stellen. Aber auch für das persönliche Zeitmanagement von Mitarbeitern und zur Protokollierung deren einzelner Tätigkeiten können im Datenerfassungsgerät entsprechend vorbereiteten Datensatzelemente aktuelle Informationen zugeordnet werden.

Damit können die ungeliebten Zeiterfassungsbögen, wie sie etwa am Ende eines Arbeitstages von den Betriebsangehörigen ausgefüllt werden müssen, künftig ebenso entfallen, wie das personalaufwendige Umsetzen der Einträge in Dateneingaben. Es entfallen damit auch die bisherigen Unbequemlichkeiten in Form von zusätzlich benötigten Hilfsmitteln (wie Karten oder codierten Vorlagen), und es entfällt das Erfordernis einer kompletten Dateneingabetastatur, die der Realisierung von handlichen mobilen Geräten im Wege steht. Durch die Vorgabe von bestimmten Datensatzelementen entfallen Unstimmigkeiten in der Datenzuordnung, und durch die automatische Übernahme der aktuellen Zeit entfallen weitere Fehlermöglichkeiten bei der Eingabe. Da beim mobilen Datenerfassungsgerät nur einige Scroll- und Quittungstasten verbleiben, ist es so weit miniaturisierbar, daß es in kleine und bereits mitgeführte Arbeitsgeräte wie z. B. in das Schreibzeug oder in eine Armbanduhr integrierbar wird, was die Akzeptanz erhöht, weil dadurch keine zusätzliche Belastung erfolgt.

Um das mobile Datenerfassungsgerät möglichst klein realisieren zu können, wird also die Dateneingabefunktionalität teilweise vom mobilen Gerät zum externen Rechner mit seiner eigenen Tastatur verlagert. Sämtliche Eingaben von alphanumerischen Zeichen, z. B. für die Initialisierung des mobilen Gerätes mit Voreinstellung der darin dann aufrufbaren Datensatzelemente, werden am externen Rechner vorgenommen. Diese Vorbereitung wird dann über eine Kommunikationsverbindung zum mobilen Datenerfassungsgerät übertragen. Dieses selbst benötigt daher kein eigenes vollständiges System zur Eingabe von alphanumerischen Zeichen, also weder eine Tastatur noch ein optisches Lesesystem. Dadurch wird eine bedeutend kleinere Bauweise für das mobile Gerät ermöglicht, was sich außerordentlich günstig auf dessen Integrationsfähigkeit in dem Benutzer vertraute Arbeitsgeräte wie z. B. Schreiber oder Armbanduhr auswirkt. Diese Integrierbarkeit in die dem Benutzer bereits vertrauten Arbeitsgeräte reduziert die durch die Datenerfassungsaufgabe entstehende Belastung des Benutzers auf ein Minimum und erhöht dadurch die Akzeptanz des Datenerfassungsgerätes beim Anwender. Da der apparative Teil, der in Halbleitertechnologie realisierbar ist, gegenüber bestehenden Systemen erheblich höher ist, ergeben sich daraus noch weitere wichtige Vorteile. So lassen sich bei einer Großserienfertigung erhebliche Kostenvorteile erzielen. Das mobile Gerät läßt sich mit anderweitigen Vorrichtungen, die ebenfalls in Halbleitertechnologie herstellbar sind, einfacher im gemeinsamen Gehäuse zusammenfassen, beispielsweise in ein Schreiber- oder in ein Uhrengehäuse integrieren. Diese vielseitige Möglichkeit, mit anderen Vorrichtungen zu jeweils einem anderen Produkt kombiniert werden zu können, verringert die Herstellungskosten pro mobilen Gerät und erhöht dessen Atraktivität sowohl für den Hersteller wie auch für den Benutzer. Ein weiterer Vorteil der Vorrichtung ist die einfache und intuitive Benutzung durch eine spezielle Bedien- und Anzeigeeinheit, die ohne ein Kartensystem zur Datenerfassung auskommt. Die genannten Vorteile ermöglichen einen weitaus größeren witschaftlichen Erfolg der erfindungsgemäßen Lösung als mit bekannten Systemen bisher erreicht wurde.

Weitere Merkmale der Erfindung sind in den Unteransprüchen genannt.

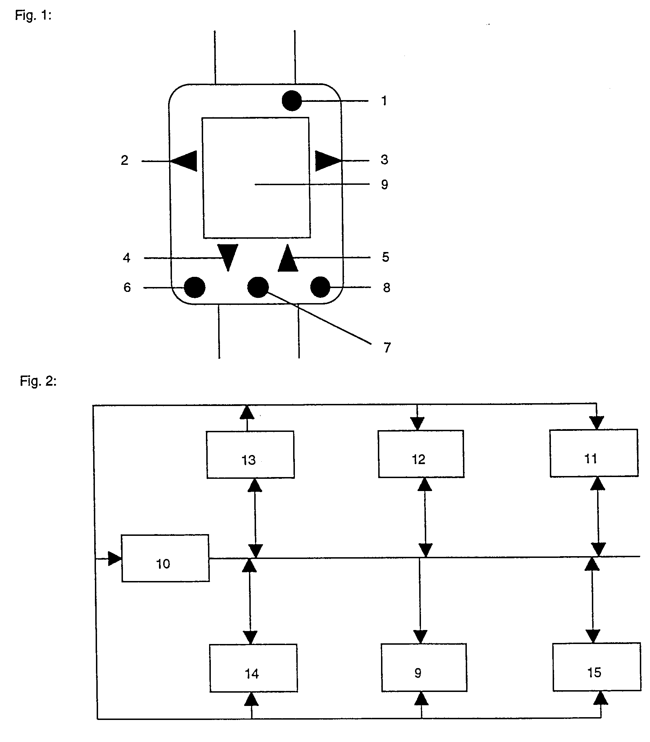

Die Erfindung wird nachstehend anhand eines Ausführungsbeispiels näher erläutert. In der Zeichnung zeigen
- Fig. 1:: das Gehäuse einer Armbanduhr mit integrierter Vorrichtung,
- Fig. 2:: eine prinzipielle Darstellung der Vorrichtung.
Nach Inbetriebnahme der Vorrichtung durch betätigen der Einschalttaste 1 (Fig. 1) und der Inbetriebnahme des externen Rechners wird die Kommunikationsverbindung zwischen beiden hergestellt. Auf dem Rechner wird ein Programm gestartet welches zunächst die Initialisierung der Vorrichtung, z. B. mit Namen des Benutzers, der Uhrzeit und die Voreinstellung der Datensatzelemente mit deren Bezeichnung und den Auswahlmöglichkeiten zur Aufgabe hat. Dazu werden die Daten mittels der Eingabeeinheit des externen Rechners vom Benutzer eingegeben und über die Kommunikationsverbindung zur Vorrichtung übertragen.

Beispielsweise wurden folgende Voreinstellungen vorgenommen:
Name: Thomas Beck
Zeit: 11 Nov 1994 08:03 52''

| Bezeichnung der Datensatzelemente: | Tätigkeit | Kostenträger | Anfangszeit |
|---|---|---|---|
| Vorgegebene Auswahlhmöglichkeiten: | Anfahrt | Fa. ABC | |
| | Akquisition | Fa. DEF | |
| | Besprechung | Uni GHI | |
| | Auftragsbearbeitung | Intern | |
| | Pause | kein | |
| | Feierabend | Privat | |
| | Urlaub | Platzhalter | |
| | Platzhalter | | |

Entsprechend des Verfahrens ist damit die Vorrichtung für die mobile Datenerfassung einsatzbereit und es lassen sich damit die Merkmale, durch die die Tätigkeiten der jeweiligen Betriebsangehörigen charakterisiert sind, zusammen mit den entsprechenden Anfangszeiten, bei Bedarf auch mit den entsprechenden Endzeiten, erfassen. Die Kommunikationsverbindung zum externen Rechner kann jetzt gelöst werden. Über die Verschiebetasten 2 und 3 werden die gespeicherten Datensatzelemente einzelnd in der oberen Hälfte der optischen Anzeigeeinheit 9 (Fig. 1) angezeigt. Mit den Verschiebetasten 4 und 5 lassen sich die jeweiligen Auswahlmöglichkeiten in der unteren Hälfte der optischen Anzeigeeinheit 9 anzeigen. Wenn dort die gewünschte Tätigkeit erscheint, wird sie mit der Bestätigungstaste 7 bestätigt und bis zur Speicherung des gesamten Datensatzes zwischengespeichert. Dieser Vorgang wird für sämtliche Datensatzelemente wiederholt. Die Anfangszeit wird durch Auswahl des gleichnamigen Datensatzelments mit den Verschiebetasten 2 und 3 und der Betätigung der Zeittaste 6 erfaßt. Die Zeittaste 6 bewirkt, daß die aktuelle Zeit zwischengespeichert wird. Wenn für sämtliche Datensatzelemente die jeweils gewünschten Auswahlmöglichkeiten zwischengespeichert wurden, wird der Datensatz mit der Speichertaste 8 in der Datenspeichereinheit 12 (Fig. 2) endgültig gespeichert. Der o.g. Vorgang wiederholt sich bei der Erfassung und Speicherung weiterer Datensätze. Im Folgenden wird ein Beispiel möglicher Datensätze gezeigt:

| Bezeichnung des Datensatzelements: | Tätigkeit | Kostenträger | Anfangszeit |
|---|---|---|---|
| Datensatz 1: | Auftragsbearbeitung | Fa. ABC | 11 Nov 94 07:58 |
| Datensatz 2: | Pause | Privat | 11 Nov 94 12:02 |
| Datensatz 3: | Besprechung | Intern | 11 Nov 94 13:00 |
| Datensatz 4: | Anfahrt | Platzhalter | 11 Nov 94 14:33 |
| Datensatz 5: | Akquisition | Platzhalter | 11 Nov 94 14:51 |
| Datensatz 6: | Feierabend | Privat | 11 Nov 94 17:43 |

Um diese Daten einer weiteren Verarbeitung zuzuführen, werden sie über die Kommunikationsverbindung zum externen Rechner übertragen. Dort werden sie verwaltet und nachbearbeitet Beispielsweise kann dort "Platzhalter" durch "Fa. RST" ersetzt werden oder das Programm erweitert die Datensätze um den Namen des Betriebsangehörigen. Nach erfolgter Nachbearbeitung können die Daten z. B. in einer Datenbank gespeichert auf die z. B. die Programme des betrieblichen Rechnungswesens Zugriff haben, und dort weiterverarbeitet werden. Aus dem Programm lassen sich mittels der Eingabeeinheit des externen Rechners auch die Datensätze in der Vorrichtung löschen oder Veränderungen bei der Initialisierung und der Voreinstellung der Auswahlmöglichkeiten für die Datensatzelemente durchführen, wie z. B. der Aufnahme der Auswahlmöglichkeit "Fa. RST" beim Datensatzelement "Kostenträger".

Die erfindungsgemäße Vorrichtung besteht, wie in Fig. 2 dargestellt, im wesentlichen aus einer zentralen Steuerung 10, aus einer Uhr 11, einer Datenspeichereinheit 12, einer autarken Energieversorgung 13, einer Bedieneinheit 14, einer Schnittstelle 15 zum externen Rechner und einer optischen Anzeigeeinheit 9. Die genannten Elemente sind elektrisch leitend mit der zentralen Steuerung 10, wie in Fig. 2 dargestellt, über einen Datenbus und eine Energieversorgungsleitung verbunden. Die Uhrzeit wird aus der Uhr 11 , von der zentralen Steuerung 10 gesteuert, gelesen und in die Datenspeichereinheit 12 eingegeben. Mittels der Bedieneinheit 14 und der zentralen Steuerung 10 werden die Daten in der Datenspeichereinheit 12 ein- und ausgelesen und in der optischen Anzeigeeinheit 9 angezeigt. Der Datenfluß zwischen der Schnittstelle 15 und den einzelnen Elementen wird ebenfalls von der zentralen Steuerung 10 gesteuert. Alle Elemente erhalten ihre Energie von der autarken Energieversorgung 13. Die eingangs- und ausgangsseitigen Verbindungen zwischen den einzelnen Elementen sind in der Fig. 2 beispielsweise dargestellt. Es ist möglich die Vorrichtung in einem Uhr- oder Schreibergehäuse anzuordnen. Durch diese Anordnung ist eine nur geringe Belastung des Benutzers durch die Vorrichtung gewährleistet.

### Liste der Bezugszeichen:

- 1: Einschalttaste Datenerfassungsgerät
- 2: Verschiebetaste links
- 3: Verschiebetaste rechts
- 4: Verschiebetaste unten
- 5: Verschiebtaste oben
- 6: Zeittaste
- 7: Bestätigungstaste
- 8: Speichertaste
- 9: Optische Anzeigeeinheit
- 10: Zentrale Steuerung
- 11: Uhr
- 12: Datenspeichereinheit
- 13: Autarke Energieversorgung
- 14: Bedieneinheit
- 15: Schnittstelle

## Patentansprüche

1. Datenerfassungsvorrichtung mit einem mobilen Datenerfassungsgerät (1), das mit Betätigungstasten (2 ...8) und mit einer optischen Anzeigeeinheit (9) ausgestattet ist, sowie mit einer Datenspeichereinheit (12) und mit einer Schnittstelle (15) für Übertragung zwischengespeicherter Informationen über eine Kommunikationsverbindung zu einem externen Rechner für die weitere Verarbeitung der übernommenen Daten,
**dadurch gekennzeichnet**,
daß im mobilen Datenerfassungsgerät (1) mittels Verschiebetasten (2, 3) vorgegebene Datensatzelemente nacheinander in einem Bereich der Anzeigeeinheit (9) und mittels weiterer Verschiebetasten (4, 5) vorgegebene Auswahlmöglichkeiten nacheinander in einem weiteren Bereich der Anzeigeeinheit (9) aufrufbar sowie über eine Bestätigungstaste (7) einander unter Zwischenspeicherung zuordenbar sind.

2. Datenerfassungsvorrichtung nach Anspruch 1,
**dadurch gekennzeichnet**,
daß das mobile Datenerfassungsgerät (1) auch mit einer Zeittaste (6) ausgestattet ist, mittels der der aktuell von einer Uhr (11) gelieferte Zeitpunkt dem gerade angezeigten Datensatzelement zuordenbar ist.

3. Datenerfassungsvorrichtung nach Anspruch 1 oder 2,
**dadurch gekennzeichnet**,
daß das mobile Datenerfassungsgerät (1) außerdem mit einer Speichertaste (8) ausgestattet ist, bei deren Betätigung die in Zuordnung zu einem gerade angezeigten Datensatzelement zwischengespeicherten Auswahlmöglichkeiten bzw. Zeitpunkte in eine Datenspeichereinheit (12) übergebbar sind, aus der sie über die Kommunikationsverbindung in den externen Rechner übertragbar sind.

4. Datenerfassungsvorrichtung nach einem der vorangehenden Ansprüche,
**dadurch gekennzeichnet**,
daß unter den Datensatzelementen und/oder unter den Auswahlmöglichkeiten auch voneinander unterscheidbare Platzhalter vorgesehen sind, die erst im externen Rechner durch konkrete Angaben ersetzbar sind.

5. Datenerfassungsvorrichtung nach einem der vorangehenden Ansprüche,
**dadurch gekennzeichnet**,
daß das mobile Datenerfassungsgerät (1) vom externen Rechner aus unter Aktivierung der aufrufbaren Datensatzelemente und Auswahlmöglichkeiten über die Kommunikationsverbindung initialisierbar ist, die danach während der Bedienung des mobilen Datenerfassungsgerätes (1) bis zum Überspielen des Inhalts der Datenspeichereinheit (12) aufgehoben ist.
